# EUROPÄISCHE PATENTSCHRIFT

(11) **EP 2 999 603 B1**
(45) Veröffentlichungstag und Bekanntmachung des Hinweises auf die Patenterteilung: **10.10.2018**
(21) Anmeldenummer: 14721207.0
(22) Anmeldetag: 24.04.2014
(51) Int. Cl.: B60G 7/00, B62D 17/00, F16D 41/066, F16D 41/10

(54) **VORRICHTUNG ZUR STURZ- UND/ODER SPURVERSTELLUNG EINES FAHRZEUGRADES**
DEVICE FOR CAMBER AND / OR TOE ADJUSTMENT OF A VEHICLE WHEEL
DISPOSITIF DE RÉGLAGE DE CARROSSAGE ET / OU DE PARALLÉLISME D'UNE ROUE DE VÉHICULE

(30) Priorität: 21.05.2013 DE 102013008652
(43) Veröffentlichungstag der Anmeldung: 30.03.2016
(73) Patentinhaber: AUDI AG, 85045 Ingolstadt (DE)
(72) Erfinder: PFEIFFER, Ulrich, 85123 Karlskron / Probfeld (DE)
(74) Vertreter: Reichert, Thomas Klaus
(86) Internationale Anmeldenummer: PCT/EP2014/001098
(87) Internationale Veröffentlichungsnummer: WO 2014/187525

(56) Entgegenhaltungen:
- DE-A1-102005 023 250
- DE-A1-102007 054 823
- DE-A1-102009 021 477
- DE-A1-102009 031 344
- US-A1- 2007 080 513

## Beschreibung

Die Erfindung betrifft eine Vorrichtung zum Verstellen von Sturz und/oder Spur eines Fahrzeugrades eines Kraftfahrzeuges gemäß dem Oberbegriff des Patentanspruches 1.

Bei einem gattungsgemäßen Kraftfahrzeug mit einer Radaufhängung werden die den Sturz und/oder die Spur des Fahrzeugrades bestimmenden Drehteile eines Stellglieds über Stelltriebe (zum Beispiel einem Stirnzahnradtrieb) und Elektromotoren in beiden Drehrichtungen gegensinnig oder gleichsinnig verstellt. Es muss aber sichergestellt sein, dass Reaktionsmomente aus den dynamisch und statisch auftretenden Radlasten keine unbeabsichtigte Verstellung bewirken. Derartige Reaktionsmomente werden von den Drehteilen des Stellglieds über eine Getriebestufe bis zu einem Antriebsmotor übertragen. Das heißt, dass vom Antriebsmotor ständig ein Gegenmoment (während des Betriebes teilweise mit wechselnden Richtungen) aufzubringen ist, um die eingestellte Sollstellung der beiden Drehteile aufrecht zu erhalten. Sofern die eingestellte Sollstellung der Drehteile auch im abgestellten Zustand des Fahrzeuges aufrecht erhalten werden soll, müsste selbst in diesem Fall ein Gegenmoment aufgebracht werden, das heißt der Antriebsmotor mit Halteenergie beaufschlagt werden.

Aus der DE 10 2009 031 344 A1 ist eine gattungsgemäße Vorrichtung bekannt, bei der zwischen dem Antriebsmotor und dem Stellelement zur Sturz und/oder Spurverstellung eine Schlingfederbremse trieblich zwischengeschaltet ist. Mit Hilfe der Schlingfederbremse kann eine Momentenübertragung vom Antriebsmotor auf das Stellelement freigeschaltet werden. Demgegenüber blockiert die Schlingfederbremse ohne Fremdenergie eine Übertragung von Reaktionsmomenten in der Gegenrichtung.

Aus der DE 10 2005 023250 A1 ist ein längenverstellbarer Aktuator zum Verstellen von Sturz und/oder Spur bekannt, mit einem als doppelt wirkender Freilauf ausgebildeten Sperrelement.

Nachfolgend ist der konstruktive Aufbau der Schlingfederbremse sowie die sich daraus ergebende Problematik erläutert: Die Schlingfederbremse ist antriebsseitig mit einem Öffnerteil und abtriebsseitig mit einem Schließerteil aufgebaut, die unter Belassung eines Umfangsspieles in beiden Drehrichtungen formschlüssig ineinander greifen. Außerdem ist eine Schlingfeder vorgesehen, deren Federschenkel jeweils zwischen das Öffnerteil und das Schließerteil einragen. Die Schlingfederbremse ist so ausgelegt, dass sie erst bei Aufbau eines vom Stellelement in Richtung Antriebsmotor wirkenden Reaktionsmomentes in ihre Sperrstellung übergeht, in der eine Weiterleitung des Reaktionsmoments blockiert ist. Ein solcher Übergang in die Sperrstellung erfolgt dadurch, dass sich die Schlingfeder bei Beaufschlagung des Reaktionsmomentes aufweitet. Dies erzeugt einen derartigen Reibschluss mit einer Außenhülse, dass eine Momentenübertragung zum Elektromotor verhindert ist. Da in der DE 10 2009 031 344 A1 der Übergang der Schlingfeder in ihre Sperrstellung erst bei Aufbau des Reaktionsmomentes erfolgt, besteht die Gefahr, dass das Reaktionsmoment noch vor Erreichen der Sperrstellung auf den Antriebsmotor einwirkt, was gegebenenfalls zu einer Verstellung des Stellelementes aus seiner Sollstellung führen kann.
Die Aufgabe der Erfindung besteht darin, eine Vorrichtung zur Sturz- und/oder Spurverstellung bereitzustellen, bei der in zuverlässiger sowie einfacher Weise auch im abgestellten Zustand des Fahrzeuges die eingestellte Sollstellung des Stellelementes aufrecht erhalten werden kann.

Die Erfindung beruht auf der Erkenntnis, dass im Stand der Technik der Übergang der Schlingfederbremse in ihre Sperrstellung erst mit dem Aufbau eines Reaktionsmomentes erfolgt. Das heißt, dass beim Aufbau des Reaktionsmomentes das Sperrelement noch nicht in seiner Sperrstellung ist, wodurch zumindest teilweise ein Reaktionsmoment auf den Antriebsmotor übertragen werden kann. Vor diesem Hintergrund weist die Vorrichtung gemäß dem kennzeichnenden Teil des Patentanspruches 1 als Sperrelement keine Schlingfederbremse, sondern einen doppelt wirkenden Freilauf auf, der bei einem Antriebsmoment der Drehantriebseinheit öffnet und bei einem Reaktionsmoment des Stellelementes schließt. Bevorzugt kann sich der Freilauf bereits in seiner Ruhelage, das heißt noch vor Beaufschlagung eines Reaktionsmomentes, dauerhaft in seiner Sperrstellung befinden, in der eine Übertragung des Reaktionsmomentes auf die Antriebsdreheinheit verhindert ist. Vor diesem Hintergrund kann der Freilauf eine Klemmkörpereinheit aufweisen, die bereits ohne äußere Momentenbeaufschlagung, das heißt ohne Reaktionsmoment sowie ohne Antriebsmoment, den Freilauf mit einem vorgegebenen Sperrmoment in seiner Sperrstellung hält.

Der Freilauf kann auf seiner Abtriebsseite ein Schließerteil und auf seiner Antriebsseite ein Öffnerteil aufweisen. Das Schließerteil und das Öffnerteil können unter Belassung eines Umfangsspiels in beide Drehrichtungen ineinandergreifen. Bevorzugt ist die Klemmkörpereinheit dem Schließerteil zugeordnet. Die Klemmkörpereinheit kann das Schließerteil bereits im oben definierten Fertigungszustand des Freilaufs mit dem Sperrmoment beaufschlagen.

Erst bei Aufbau eines Antriebsmomentes von der Antriebsdreheinheit, das zusätzlich auch das gegengerichtete Sperrmoment überschreiten muss, kann der Freilauf, das heißt insbesondere dessen Schließerteil, in die Freigabestellung übergehen. Demgegenüber stellt sich beim Aufbau des gegengerichteten Reaktionsmomentes im Freilauf ein Selbstverstärkungseffekt ein, bei dem das ohnehin vorhandene Sperrmoment um das Reaktionsmoment erhöht wird.

In einer konstruktiv bevorzugten Ausführungsform kann die Klemmkörpereinheit zumindest ein Klemmkörperpaar aufweisen. Deren Klemmkörper können am Schließerteil in Umfangsrichtung zueinander gegensinnig mit einem Federelement vorgespannt sein, und zwar unter Ausübung des Sperrmomentes in eine Klemmposition vorgespannt sein. In dieser Klemmposition ist jeder der Klemmkörper zwischen einem drehfest im Freilauf-Gehäuse integrierten Laufring und einer radial nach außen ansteigenden Klemmrampe des Schließerteiles festgeklemmt.

Zum Entsperren des Schließerteiles kann das Öffnerteil zumindest einen Mitnehmer aufweisen. Dieser ist über das Umfangsspiel zwischen zwei Bewegungsanschlägen des Schließerteiles bewegbar. Der Mitnehmer des Öffnerteils kann außerdem zumindest einen Axialsteg aufweisen. Beim Anschlagen am Bewegungsanschlag des Schließerteiles kann dieser Axialsteg den zugewandten Klemmkörper von seiner Klemmposition in seine Freigabeposition drücken.

Nach erfolgtem Anschlagen des Öffnerteil-Mitnehmers am Schließerteil-Bewegungsanschlag dreht das Öffnerteil zusammen mit dem Schließerteil bewegungsgekoppelt weiter. Durch diese Drehbewegung wird auch der dem Axialsteg des Mitnehmers abgewandte Klemmkörper von seiner Klemmposition in seine Freigabeposition gerutscht.

In der Einbaulage ist der Freilauf an seiner Antriebsseite, das heißt dem Öffnerteil, mit einem zur Antriebsdreheinheit führenden Wellenabschnitt trieblich verbunden. An seiner Abtriebsseite, das heißt dem Schließerteil, ist der Freilauf mit einem zum Stellelement führenden Wellenabschnitt trieblich gekoppelt.

Bevorzugt kann das Öffnerteil mehrere gleichmäßig umfangsverteilte radiale Mitnehmer aufweisen, die jeweils in Ausnehmungen des Schließerteiles einragen. Damit ist in einfacher Weise die in Umfangsrichtung formschlüssige Verbindung des Öffnerteiles und des Schließerteiles bereitgestellt, wobei das Umfangsspiel gezielt auf die Antriebsverhältnisse abstimmbar ist.

Zudem können die Klemmkörper durch elastisch vorgespannte Elemente, vorzugsweise Federelemente, der Klemmrampe (das heißt schiefe Ebene) hinauf gedrückt werden, um dauerhaft die Sperrfunktion ausüben zu können. Durch den dabei auftretenden Reibschluss zwischen den Klemmkörpern, dem Laufring (oder dem Freilauf-Gehäuse) und den Klemmrampen kommt es zur Verklemmung und damit zur Sperrwirkung. Über geeignete Werkstoff- und Oberflächenpaarungen der beteiligten Elemente kann der Reaktionsgrad der Sperrwirkung vorteilhaft beeinflusst werden. Die Klemmkörper sind bevorzugt zylindrisch ausgeführt, können jedoch auch jegliche andere Geometrie aufweisen, wie sie von handelsüblichen Freiläufen bekannt sind. Zudem können die Federelemente aus Metall, Kunststoff oder Elastomeren bestehen. Die Federelemente stützen sich bevorzugt auf dem abtriebsseitigen Schließerteil ab, jedoch vorzugsweise nicht zueinander gegenseitig.

Schließlich kann zur Bereitstellung einer fertigungstechnisch günstigen und einfachen Vormontageeinheit der trieblich mit dem Öffnerteil gekoppelte Wellenabschnitt und der trieblich mit dem Schließerteil gekoppelte Wellenabschnitt innerhalb des Freilaufgehäuses angeordnet sein. Das Freilaufgehäuse kann mit dem Elektromotor-Gehäuse verbindbar sein.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen näher erläutert.

Es zeigen:
- Fig. 1: eine Radaufhängung eines Kraftfahrzeuges mit einem mehrteiligen, an Radführungselementen angelenkten Radträger, dessen Fahrzeugrad über zwei verdrehbare Stellzylinder verstellbar ist, wobei die Stellzylinder jeweils mittels eines Stelltriebes und eines Elektromotors verdrehbar sind;
- Fig. 2: den Radträger aus der Fig. 1 mit dem lenkerseitigen Führungsteil, das einen Elektromotor trägt, wobei zwischen dem Elektromotor und dem Antriebszahnrad des Stelltriebes ein doppelt wirkender Freilauf angeordnet ist;
- Fig. 3: die zwischen dem Elektromotor und einem Antriebszahnrad des Stelltriebes angeordnete Antriebswelle mit integriertem Freilauf;
- Fig. 4: der Freilauf in Alleinstellung;
- Fig. 5: in einer Ansicht entsprechend der Fig. 4 den Freilauf mit weggelassenem Laufring;
- Fig. 6 und 7: jeweils Explosionsdarstellungen des Freilaufes in unterschiedlichen perspektivischen Ansichten; und
- Fig. 8 bis 11: jeweils Ansichten, die den Freilauf in unterschiedlichen Betriebszuständen zeigen.

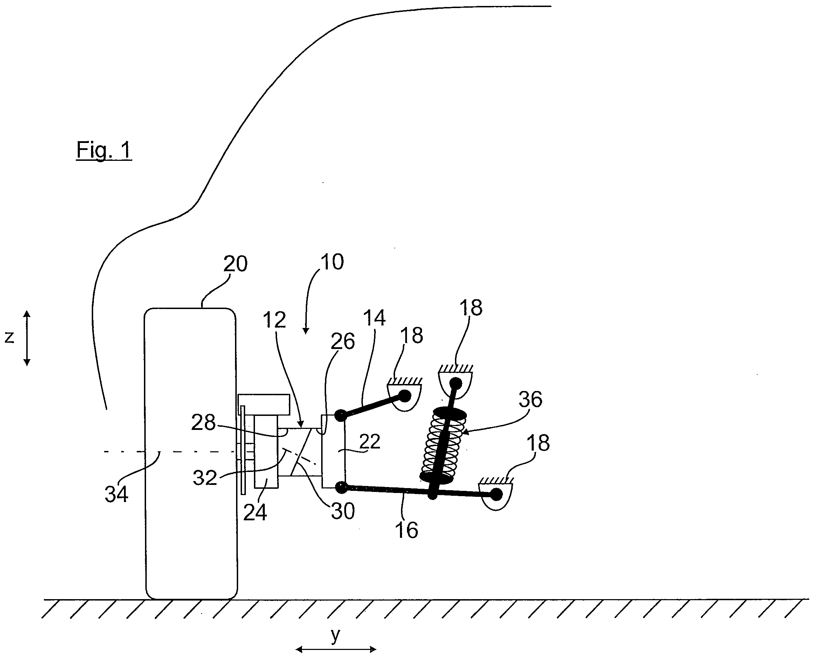

In der Fig. 1 ist eine Radaufhängung 10 für Kraftfahrzeuge grob schematisch dargestellt, bei der ein Radträger 12 über Querlenker 14, 16 als Radführungselemente an einem nur angedeuteten Aufbau 18 angelenkt ist.

Der das Rad 20 drehbar aufnehmende Radträger 12 ist unterteilt in ein an den Querlenkern 14, 16 angelenktes Führungsteil 22, ein das Rad 20 über ein entsprechendes Radlager (nicht dargestellt) aufnehmendes Trägerteil 24 und in zwei verdrehbar am Führungsteil 22 und am Trägerteil 24 gelagerte Drehteile 26, 28, die über eine senkrecht zu einander zugewandten Schrägflächen 30 verlaufende Drehachse 32 verstellbar sind. Ein Verdrehen eines oder beider Drehteile 26, 28 bewirkt ein Verkippen des Trägerteils 24 relativ zur Raddrehachse 34 und dementsprechend ein Verstellen der Spur und/oder Sturz des Rades 20 der Radaufhängung 10. Die Radlast ist in bekannter Weise über eine Tragfeder beziehungsweise das Federbein 36 gegenüber dem Aufbau 18 abgestützt.

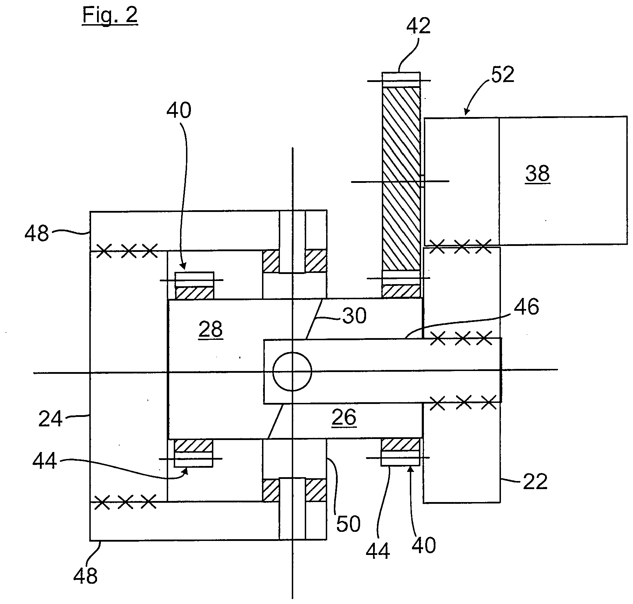

In der Fig. 2 ist die Betätigung der Drehteile 26, 28 zur Spur- und Sturzeinstellung des Rades 20 näher dargestellt. Dazu ist je Drehteil 26, 28 ein Elektromotor 38 (es ist nur der Elektromotor 38 des Führungsteils 22 ersichtlich) vorgesehen, der an dem Führungsteil 22 beziehungsweise an dem Trägerteil 24 befestigt ist. Die Elektromotoren 38 treiben über Stirnzahnradtriebe 40 beziehungsweise über ein Antriebszahnrad 42 und ein an den Drehteilen 26, 28 befestigtes Zahnrad 44 die Drehteile 26, 28 in beiden Drehrichtungen verstellbar an. Ein an Auslegern 46, 48 kardanisch verschwenkbarer Kardanring 50 ist zur Momentenabstützung des Trägerteiles 24 relativ zum Führungsteil 22 vorgesehen.

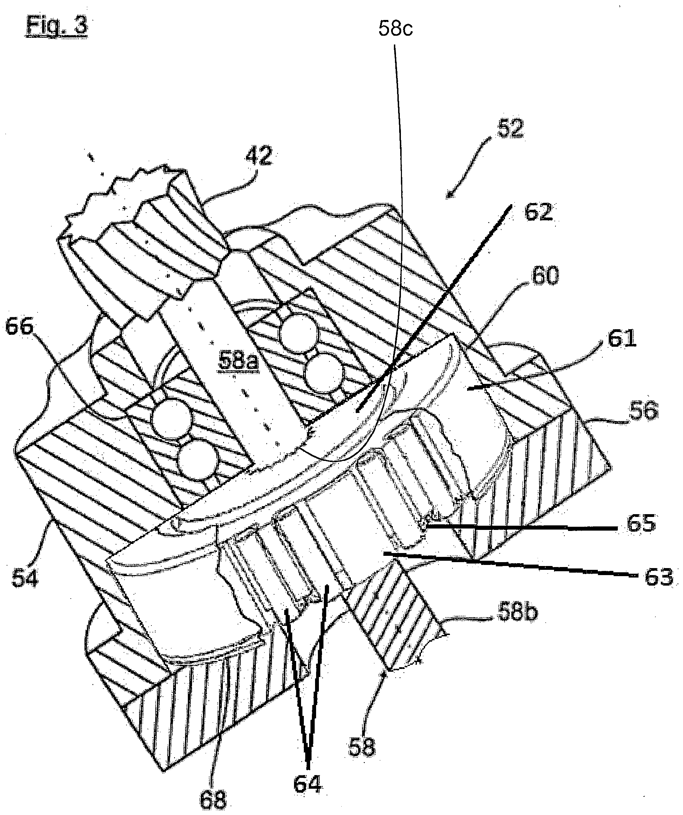

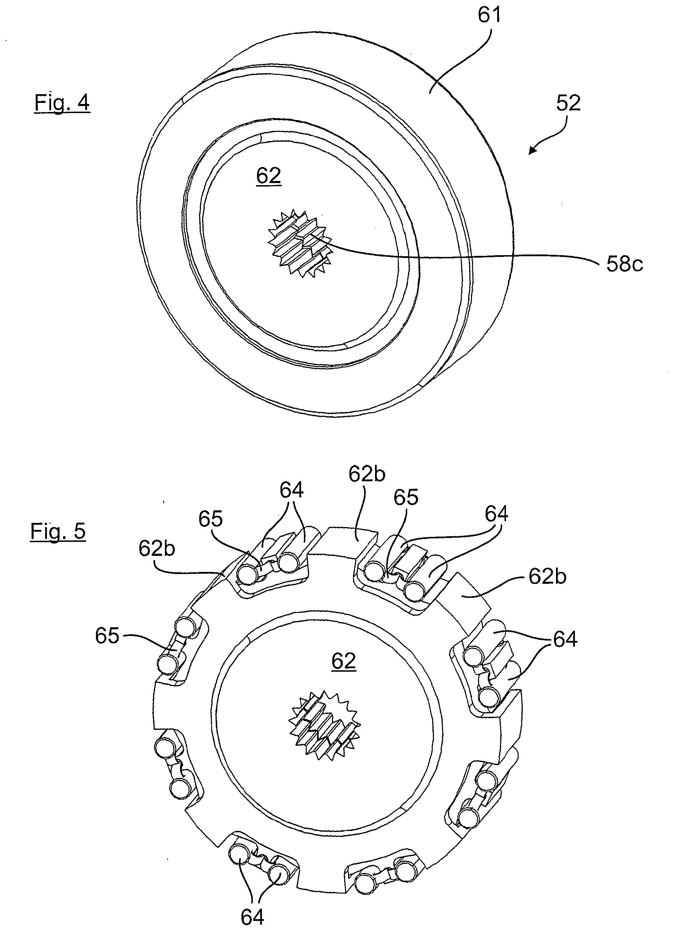

Zwischen den Elektromotoren 38 und deren Antriebszahnrädern 42 ist jeweils ein als Sperrelement wirkender Freilauf 52 eingeschaltet (in der Fig. 2 ist nur ein Freilauf 52 angedeutet). Der Freilauf 52 ist in den folgenden Figuren 3 bis 11 in der konstruktiven Ausführungsform dargestellt sowie funktionell beschrieben. Der Freilauf 52 ermöglicht einen ungehinderten Antrieb der Drehteile 26, 28 in den beiden Drehrichtungen, stützt jedoch ein aus der statischen und/oder dynamischen Radlast entstehendes Reaktionsmoment M_{R} ab.

Anhand der Fig. 3 bis 7 sind Einzelteile des Freilaufs 52 gezeigt, der ein äußeres Gehäuse 54 und eine die Gehäuseöffnung einerseits abschließende Adapterplatte 56, eine in zwei Abschnitte 58a, 58b unterteilte Antriebswelle 58 und ein in das Gehäuse 54 fest eingesetztes, doppelt wirkendes Freilaufsystem aufweist. Dieses ist aus einem radial äußeren, drehfest im Gehäuse 54 eingesetzten Laufring 61 sowie einem Schließerteil 63, einem Öffnerteil 62 und aus paarweise angeordneten Klemmkörpern 64 sowie Federelementen 65 aufgebaut.

Der abtriebsseitige Wellenabschnitt 58a der Antriebswelle 58 erstreckt sich durch das Gehäuse 54 und trägt einerseits das Antriebszahnrad 42 des Stirnzahnradtriebes 40. Andererseits ist der Wellenabschnitt 58a in nicht gezeigter, kraftübertragender Steckverbindung mit einer Steckverzahnung 58c des Schließerteils 63. Der antriebsseitige Wellenabschnitt 58b entspricht der Motorwelle des nicht gezeigten Elektromotors und ist ebenso in einer kraftübertragenden Steckverbindung mit einer Steckverzahnung 58d des Öffnerteiles 62. Das Gehäuse 54 ist über die Adapterplatte 56 mit dem Gehäuse des Elektromotors 38 verschraubt. Der Wellenabschnitt 58a der Antriebswelle 58 ist über ein zweireihiges Wälzlager 66 im Gehäuse 54 drehbar gelagert.

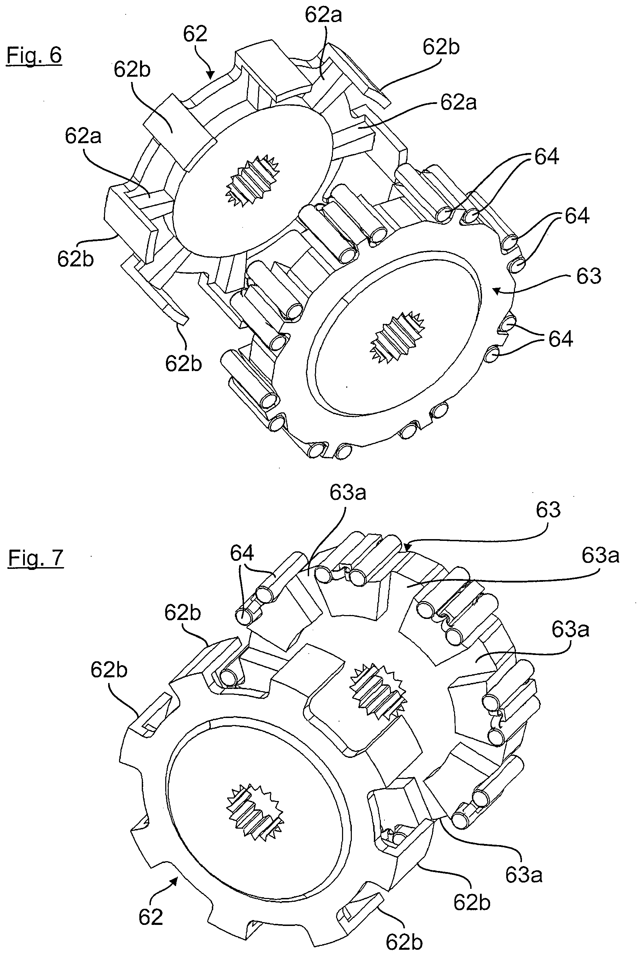

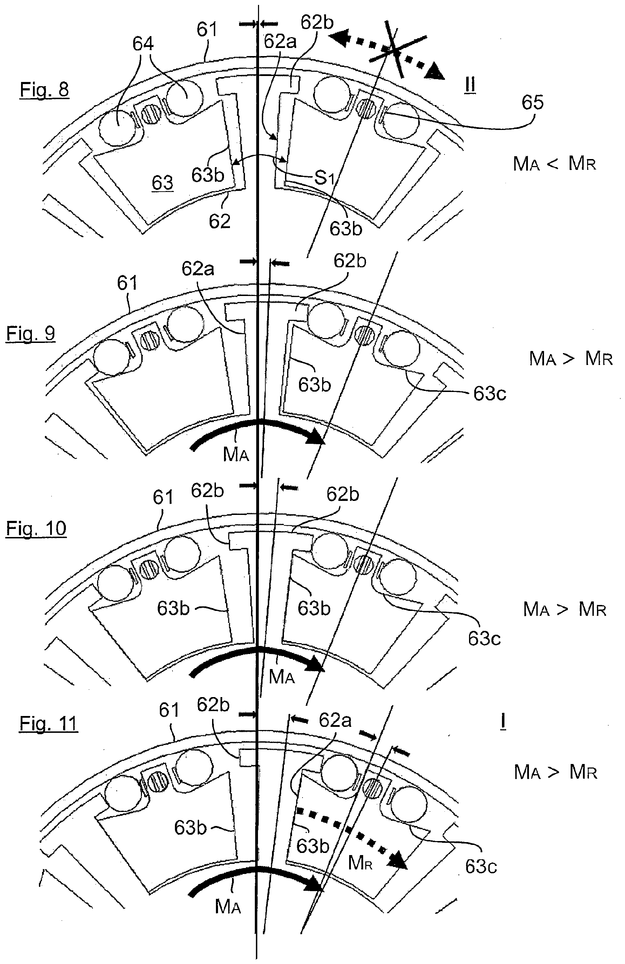

Wie aus den Fig. 6 bis 11 hervorgeht, weist das Öffnerteil 62 sternförmig in Richtung auf eine Drehachse des Freilaufs zusammenlaufende Mitnehmer 62a (Fig. 6) auf. Die Mitnehmer 62a ragen in korrespondierende Ausnehmungen 63a (Fig. 7) des Schließerteiles 63 ein, und zwar so, dass sich jeder Mitnehmer 62a um ein definiertes Umfangsspiel s₁ (Fig. 8) zwischen zwei gegenüberliegenden Bewegungsanschlägen 63b bewegen kann. Die Mitnehmer 62a gehen an ihrem radial äußeren Ende in hammerförmig profilierte Axialstege 62b über. Diese schieben im Antriebsfall (das heißt in der Freigabestellung I gemäß der Fig. 11) die zugewandten Klemmkörper 64 den Klemmrampen (das heißt schiefe Ebenen) 63b des Schließerteils 63 hinab. Zwischen den Axialstegen 62b und den Klemmkörpern 64 ist ebenfalls ein definiertes Umfangsspiel s₂ (Fig. 8) vorgesehen. Das Umfangsspiel s₁ zwischen den Mitnehmern 62a und den korrespondierenden Ausnehmungen 63a ist geringfügig größer als das Umfangsspiel s₂ zwischen den Klemmkörpern 64 und den Axialstegen 62d.

In einer Ruhelage (Fig. 8) halten die Federelemente 65 die Klemmkörper 64 durch ihre leichte Vorspannung dauerhaft in der Sperrstellung II (Fig. 8). Damit wird jedwede Drehbewegung ausgehend von der Abtriebsseite, das heißt der abtriebsseitige Wellenabschnitt 58a, gesperrt.

Wird für eine Verstellung der Drehteile 26, 28 der Elektromotor 38 bestromt, so treibt dieser in der einen oder anderen Drehrichtung über den antriebsseitigen Wellenabschnitt 58b den doppelt wirkenden Freilauf 52 an. Dabei wird von dem Elektromotor 38 ein Antriebsmoment M_{A} (Fig. 9 bis 11) in den Freilauf 52 eingeleitet, der von der Sperrstellung II (Fig. 8 und 9) in die, in der Fig. 10 und 11 gezeigte Freigabestellung I übergeht. Damit wird das Antriebsmoment M_{A} bis zum Drehteil 26 übertragen.

Das eingeleitete Antriebsmoment M_{A} entsperrt die Klemmkörper 64 nur dann, wenn es größer ist als ein gegensinniges Reaktionsmoment M_{R} bzw. deren Drehrichtungen gleich sind. In diesem Fall können die Axialstege 62b des Öffnerteiles 62 die, in der Drehrichtung zugewandten Klemmkörper 64 die Klemmrampe (schiefe Ebene) 63b hinunter drücken, das heißt entsperren. Dreht sich nun das Öffnerteil 62 weiter, so schlagen dessen Mitnehmer 62a an die korrespondierenden Bewegungsanschläge 63b der Ausnehmungen 63a des Schließerteiles 63 an und bewegen diese in der Drehrichtung weiter. Damit lösen sich auch die vom Axialsteg 62b abgewandten Klemmkörper 64, die die andere Drehrichtung blockieren. Das Antriebsmoment wird somit bis zur Abtriebsseite, das heißt dem Wellenabschnitt 58a übertragen. Bei einer Drehrichtungsumkehr läuft der oben dargestellte Vorgang sinngemäß umgekehrt ab.

Ist der Elektromotor 38 nicht aktiviert und überträgt dieser kein Antriebsmoment M_{A}, so werden gemäß der Fig. 7 gegebenenfalls auftretende Reaktionsmomente M_{R} aus der Radlast, die sich über die Drehteile 26, 28 und die Stirnzahnradtriebe 40 auf die Antriebswelle 58 auswirken, durch die Klemmkörper 64 über das Gehäuse 54 abgestützt.

Dabei wirkt das Reaktionsmoment M_{R} über das Antriebszahnrad 42, den Wellenabschnitt 58a und das Schließerteil 63 auf die Klemmkörper 64. Diese werden durch die Federelemente 65 in der Sperrposition am oberen Ende der Klemmrampen (schiefe Ebenen) 63b gehalten. Da keine Entsperrung durch die Axialstege 61a vorliegt, verstärkt das eingeleitete Reaktionsmoment M_{R} die Sperrwirkung und der doppelt wirkende Freilauf bleibt in der Sperrstellung II (Fig. 7). Die Antriebswelle 58 mit dem Schließerteil 63 kann somit innerhalb des Gehäuses 54 nicht verdreht werden. Der gleiche Effekt tritt auch auf bei einem in entgegengesetzter Drehrichtung auftretenden Drehmoment auf.

Zur Erhöhung des übertragbaren Sperrmomentes des doppelt wirkenden Freilaufs 52 sind möglichst viele Klemmkörper 64 paarweise über den Umfang verteilt. Die Werkstoffe, Oberflächenvergütungen und Reibwertepaarungen der Klemmkörper 64, des Schließerteiles 63 und des Öffnerteiles 62 sind je nach berechneter Belastung des Freilaufs 52 ausgelegt.

## Patentansprüche

1. Vorrichtung zum Verstellen von Sturz und/oder Spur eines Fahrzeugrads (20), mit einem Radträger (12), zwischen dessen das Fahrzeugrad (20) aufnehmenden, radseitigen Trägerteil (24) und dessen mit einer Radaufhängung verbundenen, achsseitigen Führungsteil (22) zumindest ein um eine Drehachse drehbares Stellelement (26, 28) geschaltet ist, das zum Verstellen des Sturzes und/oder der Spur des Fahrzeugrads (20) über einen Stirnzahnradtrieb (40) mittels einer Antriebsdreheinheit (38) verstellbar ist, wobei in dem Antriebsweg zwischen der Antriebsdreheinheit (38) und dem Stellelement (26, 28) ein Sperrelement (52) geschaltet ist, das in einer Freigabestellung (I) den Antriebsweg für eine Übertragung eines Antriebsmoments (M_{A}) von der Antriebsdreheinheit (38) auf das Stellelement (26, 28) freischaltet, und in einer Sperrstellung (II) ein Sperrmoment erzeugt, das einem vom Stellelement (26, 28) auf die Antriebsdreheinheit (38) gerichteten Reaktionsmoment (M_{R}) entgegenwirkt, **dadurch gekennzeichnet, dass** das Sperrelement (52) ein doppelt wirkender Freilauf ist, der bei einem Antriebsmoment (M_{A}) der Drehantriebseinheit (38) öffnet und bei einem Reaktionsmoment (M_{R}) des Stellelements (26, 28) schließt.

2. Vorrichtung nach Anspruch 1, **dadurch gekennzeichnet, dass** der Freilauf (52) auf seiner Abtriebsseite ein Schließerteil (63) und auf seiner Antriebsseite ein Öffnerteil (62) aufweist, die unter Belassung eines Umfangsspiels (s₁) in beide Drehrichtungen ineinander greifen.

3. Vorrichtung nach Anspruch 1 oder 2, **dadurch gekennzeichnet, dass** dem Freilauf (52), insbesondere dem Schließerteil (63), zumindest ein Klemmkörper (64) zugeordnet ist, der das Schließerteil (63) in einem Fertigungszustand des Freilaufs (52), das heißt ohne Momentenbeaufschlagung des Freilaufs (52), mit dem Sperrmoment in der Sperrstellung (II) hält.

4. Vorrichtung nach einem der Ansprüche 1, 2 oder 3, **dadurch gekennzeichnet, dass** erst bei Aufbau des Antriebsmoments (M_{A}) und bei dessen Überschreiten des gegensinnigen Sperrmoments der Freilauf (52), insbesondere dessen Schließerteil (63), in die Freigabestellung (I) übergeht.

5. Vorrichtung nach einem der vorhergehenden Ansprüche, **dadurch gekennzeichnet, dass** sich bei Aufbau des Reaktionsmoments (M_{R}) im Freilauf (52) ein Selbstverstärkungseffekt einstellt, bei dem das Sperrmoment um das Reaktionsmoment (M_{R}) erhöht wird.

6. Vorrichtung nach einem der Ansprüche 3, 4 oder 5, **dadurch gekennzeichnet, dass** die Klemmkörper (64) zumindest paarweise angeordnet sind, und/oder die Klemmkörper (64) am Schließerteil (63) in Umfangsrichtung zueinander gegensinnig mit dem Sperrmoment in eine Klemmposition vorgespannt sind, in der jeder Klemmkörper (64) zwischen einem gehäusefesten Laufring (61) und einer radial nach außen ansteigenden Rampe (63b) des Schließerteils (63) festgeklemmt ist.

7. Vorrichtung nach Anspruch 6, **dadurch gekennzeichnet, dass** das Öffnerteil (62) zumindest einen Mitnehmer (62a) aufweist, der über das Umfangsspiel (s₁) zwischen Bewegungsanschlägen (63b) des Schließerteils (63) bewegbar ist.

8. Vorrichtung nach Anspruch 7, **dadurch gekennzeichnet, dass** der Mitnehmer (62a) des Öffnerteils (62) zumindest einen Axialsteg (62b) aufweist, und dass der Mitnehmer (62a) beim Anschlagen am Bewegungsanschlag (63b) des Schließerteils (63) mit seinem Axialsteg (62b) den zugewandten Klemmkörper (64) in seine Freigabeposition (I) drückt.

9. Vorrichtung nach Anspruch 8, **dadurch gekennzeichnet, dass** nach dem Anschlagen des Öffnerteil-Mitnehmers (62a) am Schließerteil-Bewegungsanschlag (63b) das Öffnerteil (62) und das Schließerteil (63) bewegungsgekoppelt weiterdrehen, und dass insbesondere der dem Axialsteg (62b) des Mitnehmers (62a) abgewandte Klemmkörper (64) durch die Drehbewegung von seiner Klemmposition in seine Freigabeposition (II) rutscht.

10. Vorrichtung nach einem der vorhergehenden Ansprüche, **dadurch gekennzeichnet, dass** der Freilauf (52) an seiner Antriebsseite mit einem zur Antriebsdreheinheit (38) führenden Wellenabschnitt (58b) trieblich verbunden ist, und dass der Freilauf (52) an seiner Abtriebsseite mit einem zum Stellelement (26, 28) führenden Wellenabschnitt (58a) trieblich verbunden ist.

## Claims

1. Device for camber and/or toe adjustment of a vehicle wheel (20), with a hub carrier (12), between the wheel-side, vehicle wheel (20) receiving carrier part (24) of which and the axle-side guiding part (22), connected with a wheel mounting, of which is placed at least one actuating element (26, 28) rotatable around a rotation axis, which is adjustable for camber and/or toe adjustment of the vehicle wheel (20) by means of a spur gearwheel drive (40) by means of a drive rotation unit (38), wherein in the drive path between the drive rotation unit (38) and the actuating element (26, 28) is placed a shut-off element (52), which in a release position (I) releases the drive path for a transmission of a drive torque (M_{A}) from the drive rotation unit (38) to the actuating element (26, 28), and in a shut-off position (II) generates a shut-off torque, which counters a reaction torque (M_{R}) directed from the actuating element (26, 28) onto the drive rotation unit (38), **characterised in that** the shut-off element (52) is a double acting freewheel, which opens with a drive torque (M_{A}) of the drive rotation unit (38) and closes with a reaction torque (M_{R}) of the actuating element (26, 28).

2. Device according to claim 1, **characterised in that** the freewheel (52) has on its output side a closing part (63) and on its input side an opening part (62), which, while leaving a circumferential clearance (s₁), engage with one another in both rotational directions.

3. Device according to claim 1 or 2, **characterised in that** to the freewheel (52), in particular to the closing part (63), is assigned at least one clamping body (64), which holds the closing part (63) in a production state of the freewheel (52), i.e. without the freewheel (52) being torque loaded, with the shut-off torque in the shut-off position (II).

4. Device according to one of claims 1, 2 or 3, **characterised in that** only at the build-up of the drive torque (M_{A}) and at its exceeding of the reverse shut-off torque, the freewheel (52), in particular its closing part (63), passes into the release position (I).

5. Device according to one of the preceding claims, **characterised in that** at build-up of the reaction torque (M_{R}) in the freewheel (52), is established a self-energising effect, in which the shut-off torque is increased by the reaction torque (M_{R}).

6. Device according to one of claims 3, 4 or 5, **characterised in that** the clamping bodies (64) are disposed at least in pairs, and/or the clamping bodies (64) are pretensioned at the closing part (63) in circumferential direction to one another in reverse with the shut-off torque into a clamping position, in which each clamping body (64) is securely clamped between a raceway (61) fixed to the housing and a slope (63b), rising radially to the outside, of the closing part (63).

7. Device according to claim 6, **characterised in that** the opening part (62) has at least one catch (62a), which is movable by means of the circumferential clearance (s₁) between movement stops (63b) of the closing part (63).

8. Device according to claim 7, **characterised in that** the carrier (62a) of the opening part (62) has at least one axial web (62b), and that the catch (62a) when abutting at the movement stop (63b) of the closing part (63) presses with its axial web (62b) the facing clamping body (64) into its release position (I).

9. Device according to claim 8, **characterised in that** after the abutting of the opening part catch (62a) at the closing part movement stop (63b), the opening part (62) and the closing part (63) continue to rotate movingly coupled, and that in particular the clamping body (64) facing away from the axial web (62b) of the catch (62a) by means of the rotational movement slips from its clamping position into its release position (II).

10. Device according to one of the preceding claims, **characterised in that** the freewheel (52) at its drive side is drivingly connected with an axle section (58b) leading to the drive rotation unit (38), and that the freewheel (52) at its output side is drivingly connected with an axle section (58a) leading to the actuating element (26, 28).

## Revendications

1. Dispositif de réglage du carrossage et/ou du pincement d'une roue de véhicule (20), avec un support de roue (12), tel qu'au moins un élément de réglage (26, 28) rotatif autour d'un axe de rotation est placé entre sa partie de support (24) côté roue logeant la roue de véhicule (20) et sa partie de guidage (22) côté essieu reliée à une suspension de roue, lequel élément de réglage est réglable au moyen d'une unité de rotation motrice (38) afin de régler le carrossage et/ou le pincement de la roue de véhicule (20) par l'intermédiaire d'un mécanisme de roue à denture frontale (40), un élément de blocage (52) étant placé dans la course d'entraînement entre l'unité de rotation motrice (38) et l'élément de réglage (26, 28), lequel élément de blocage libère dans une position de libération (I) la course d'entraînement pour une transmission d'un couple d'entraînement (M_{A}) de l'unité de rotation motrice (38) à l'élément de réglage (26, 28) et produit dans une position de blocage (II) un couple de blocage qui agit contre un couple de réaction (M_{R}) dirigé par l'élément de réglage (26, 28) sur l'unité de rotation motrice (38), **caractérisé en ce que** l'élément de blocage (52) est une roue libre à double action qui ouvre en présence d'un couple d'entraînement (M_{A}) de l'unité de rotation motrice (38) et ferme en présence d'un couple de réaction (M_{R}) de l'élément de réglage (26, 28).

2. Dispositif selon la revendication 1, **caractérisé en ce que** la roue libre (52) comporte sur son côté de sortie une pièce de fermeture (63) et sur son côté d'entraînement une pièce d'ouverture (62), lesquelles mordent l'une dans l'autre dans les deux sens de rotation en laissant un jeu circonférentiel (s1).

3. Dispositif selon la revendication 1 ou 2, **caractérisé en ce qu'**au moins un corps de serrage (64) est associé à la roue libre (52), en particulier à la pièce de fermeture (63), lequel corps de serrage maintient avec le couple de blocage la pièce de fermeture (63) à l'état de fabrication de la roue libre (52), c'est-à-dire sans application de couple à la roue libre (52), dans la position de blocage (II).

4. Dispositif selon l'une quelconque des revendications 1, 2 ou 3, **caractérisé en ce que** c'est seulement lorsque s'applique un couple d'entraînement (M_{A}) et que celui-ci dépasse le couple de blocage de sens contraire, que la roue libre (52), en particulier sa pièce de fermeture (63), passe dans la position de libération (I).

5. Dispositif selon l'une quelconque des revendications précédentes, **caractérisé en ce que**, lorsque s'applique un couple de réaction (M_{R}), il se crée dans la roue libre (52) un effet d'auto-amplification avec lequel le couple de blocage est augmenté du couple de réaction (M_{R}).

6. Dispositif selon l'une quelconque des revendications 3, 4 ou 5, **caractérisé en ce que** les corps de serrage (64) sont agencés au moins deux par deux, et/ou les corps de serrage (64) au niveau de la pièce de fermeture (63) en direction circonférentielle sont précontraints l'un par rapport à l'autre en sens contraire avec le couple de blocage dans une position de serrage dans laquelle chaque corps de serrage (64) est serré fixement entre une bague de roulement (61) solidaire du boîtier et une rampe (63b), montant de façon radiale vers l'extérieur, de la pièce de fermeture (63).

7. Dispositif selon la revendication 6, **caractérisé en ce que** la pièce d'ouverture (62) comporte au moins un entraîneur (62a) qui est déplaçable au-delà du jeu circonférentiel (s1) entre des butées de déplacement (63b) de la pièce de fermeture (63).

8. Dispositif selon la revendication 7, **caractérisé en ce que** l'entraîneur (62a) de la pièce d'ouverture (62) comporte au moins une traverse axiale (62b) et **en ce que** l'entraîneur (62a), lors de la butée contre la butée de déplacement (63b) de la pièce de fermeture (63), pousse avec sa traverse axiale (62b) le corps de serrage proche (64) dans sa position de libération (I).

9. Dispositif selon la revendication 8, **caractérisé en ce que**, après la butée de l'entraîneur de pièce d'ouverture (62a) contre la butée de déplacement de pièce de fermeture (63b), la pièce d'ouverture (62) et la pièce de fermeture (63) continuent à tourner dans un mouvement couplé et **en ce que**, en particulier le corps de serrage (64) éloigné de la traverse axiale (62b) de l'entraîneur (62a) glisse, par le mouvement de rotation, de sa position de serrage à sa position de libération (II).

10. Dispositif selon l'une quelconque des revendications précédentes, **caractérisé en ce que** la roue libre (52) est reliée de façon motrice par son côté d'entraînement à un tronçon d'arbre (58b) menant à l'unité de rotation motrice (38) et **en ce que** la roue libre (52) est reliée de façon motrice par son côté de sortie à un tronçon d'arbre (58a) menant à l'élément de réglage (26, 28).
